# FASCICULE DE BREVET EUROPEEN

(11) **EP 4 073 283 B1**
(45) Date de publication et mention de la délivrance du brevet: **24.07.2024**
(21) Numéro de dépôt: 20842277.4
(22) Date de dépôt: 09.12.2020
(51) Int. Cl.: C22C 19/05

(54) **SUPERALLIAGE A BASE DE NICKEL**
SUPERLEGIERUNG AUF NICKELBASIS
NICKEL-BASED SUPERALLOY

(30) Priorité: 11.12.2019 FR 1914142
(43) Date de publication de la demande: 19.10.2022
(73) Titulaire: SAFRAN, 75015 Paris (FR); Office National d'Etudes et de Recherches Aérospatiales, 91120 Palaiseau (FR)
(72) Inventeur: ROUFFIE, Anne-Laure, 77550 Moissy-cramayel (FR); FRANCHET, Jean-Michel, Patrick, Maurice, 77550 Moissy-cramayel (FR); LOCQ, Didier, 92350 Le Plessis Robinson (FR)
(74) Mandataire: Cabinet Beau de Loménie
(86) Numéro de dépôt international: PCT/FR2020/052364
(87) Numéro de publication internationale: WO 2021/116607

(56) Documents cités:
- EP-A1- 1 840 232
- EP-A1- 3 257 963
- EP-A2- 2 591 135
- JP-A- 2018 188 738
- US-A1- 2015 354 358

## Description

La présente invention concerne le domaine des superalliages à base de nickel pour application haute température et développés pour une application disque de turbine à structure duale gros grains/grains fins. Cet alliage est destiné à supporter des températures de l'ordre de 800°C dans la partie la plus chaude de la pièce et des pics de température jusqu'à 850°C, tout en conservant une résistance mécanique élevée dans la partie du disque fonctionnant à plus basse température.

Les nouvelles normes environnementales (ACARE 2020) ainsi que les exigences de réduction de coût de possession imposées par les avionneurs, obligent les motoristes à une augmentation importante des performances des turboréacteurs de nouvelle génération avec notamment une réduction forte de la consommation spécifique. Cela se traduit par un besoin d'améliorer le rendement du moteur en réduisant les ventilations des pièces chaudes et notamment des disques. La conséquence directe est alors un besoin de matériaux dont la capacité en température est accrue.

De nombreux progrès ont été réalisés dans le domaine des matériaux pour augmenter leur capacité en température: matériaux plus réfractaires, technique de la métallurgie des poudres, .... Toutefois, aujourd'hui, les gains en température sont très limités et la composition chimique du matériau ne pourra pas à elle seule permettre de remplir les objectifs fixés. En effet, aujourd'hui, pour une application disque de turbine, les performances d'un matériau résident dans sa capacité à réaliser, pour une microstructure homogène optimisée, le meilleur compromis entre les différentes propriétés mécaniques requises, souvent contradictoires.

Un moyen de repousser les limites des matériaux actuels est d'adapter la microstructure et donc les propriétés mécaniques associées aux sollicitations locales de la pièce, c'est-à-dire réaliser sur une même pièce, une microstructure duale ou à gradient. Par exemple, pour un disque de turbine, qui est une des pièces les plus sollicitées thermo-mécaniquement dans le turboréacteur, nous aurions besoin à la fois, d'une structure grains fins en alésage de disque pour ses caractéristiques de traction et fatigue à température moyenne et une structure gros grains dans la jante du même disque afin d'avoir de meilleures propriétés en fluage et fissuration à haute température.

Le procédé de traitement thermique permettant d'obtenir des alliages ayant une telle structure duale est connu, comme décrit dans la demande de brevet FR3043410. Cette demande présente un procédé pour réaliser des gradients de structure sur une pièce de type disque via un traitement thermique lui-même à gradient. Il s'agit d'un traitement thermique par induction qui permet de réaliser un traitement de mise en solution à une température étagée dans la pièce de telle manière, que :
- dans la zone la plus chaude, la température soit supérieure à la température de dissolution de la phase bloquant les joints de grains, appelée également température de solvus (pour les alliages base nickel gamma-gamma prime, la phase en question est la phase gamma prime).
- dans la zone la moins chaude, la température soit inférieure à cette température de solvus.

Ainsi, dans les zones dont la température dépassera la température de solvus de la phase gamma prime, les grains vont grossir pour former une structure favorable aux propriétés de fluage et de fissuration, alors que dans les zones dont la température restera inférieure à la température de solvus, la structure conservera la taille de grain issue du forgeage qui est généralement relativement fine et favorable aux propriétés de traction et fatigue.

En général, l'application d'un traitement à gradient est réalisée sur un alliage « classique » existant dont la composition chimique a été optimisée pour réaliser, avec une structure homogène sur toute la pièce, le meilleur compromis de propriétés mécaniques requis. Ainsi les superalliages pour disques les plus performants ont une température de fonctionnement cible de 760°C, avec éventuellement des pics à 800°C. Or, les compositions chimiques existantes ne sont pas optimales pour la configuration d'un traitement à gradient. L'amélioration des performances de la pièce passe donc par la définition d'une composition chimique spécifique à un traitement à gradient de la pièce.

Un exemple d'alliage à base de nickel connu est décrit dans le document EP1840232 ou dans l'article de J-Y. Guédou et al. (Development of a new fatigue and creep résistant PM nickel-base superalloy for disk applications, Proceedings of Superalloys 2008). Cet alliage est commercialisé sous la référence N19 (SMO43).

Cet exemple d'alliage, de même que les alliages de l'invention, fait partie des alliages biphasés qui comprennent : une phase dite gamma formée par une solution solide à base de nickel, qui constitue la matrice des grains métallurgiques, et une phase dite gamma prime, dont la structure est basée sur le composé intermétallique ordonné Ni₃Al. La phase gamma prime forme plusieurs populations de précipités inter ou intra-granulaires qui apparaissent à différentes étapes de l'histoire thermomécanique de l'alliage et qui ont des rôles distincts dans le comportement mécanique de l'alliage. Les superalliages à base de nickel sont donc des matériaux à matrice base nickel austénitique gamma (cubique à faces centrées, donc plutôt ductile) renforcée par des précipités durcissant gamma prime (de structure L1₂) cohérente avec la matrice, c'est-à-dire ayant une maille atomique très proche de celle-ci.

La densité de ces alliages est également un point d'attention. Or l'état de l'art de ces 10 dernières années montre une tendance forte concernant l'utilisation de Tantale dans des teneurs de plus en plus élevées, ce qui se traduit par une augmentation de la densité des alliages.

Ainsi, outre les performances améliorées en terme de propriétés mécaniques aux températures des zones de disques considérées, la composition chimique devra conduire aux propriétés intrinsèques de l'alliage suivantes :
- une densité maitrisée : < 8500 kg/m³ ;
- une stabilité métallurgique (absence de phases TCP - Topological Compact Phases) jusqu'à 800 - 850°C ;
- une bonne résistance à l'oxydation ;
- un écart entre la température de solvus gamma prime et la température de la brulure de l'alliage suffisamment important pour la réalisation du traitement supersolvus.

Les inventeurs ont découvert de façon surprenante qu'il était possible d'obtenir de telles propriétés à l'aide d'un superalliage à base de nickel exempt de tantale et contenant des teneurs plus faibles en chrome que l'alliage décrit dans EP1840232 et en particulier que l'alliage le plus performant commercialisé (N19/SMO43).

La présente invention concerne donc un superalliage à base de nickel, caractérisé en ce que sa composition comprend, en particulier est constituée de, en pourcentages en poids de la composition totale :
Chrome : 10,0 - 11,25, avantageusement 10,0 - 11,0 ;
Cobalt : 11,2 - 13,7, avantageusement 12,0 - 13,0 ;
Molybdène : 3,1 - 3,8, avantageusement 3,3 - 3,7 ;
Tungstène : 3,1 - 3,8, avantageusement 3,1 - 3,5 ;
Aluminium : 2,9 - 3,5, avantageusement 3,2 - 3,5;
Titane : 4,6 - 5,6 avantageusement 4,6 - 5,0 ;
Niobium : 1,9 - 2,3, avantageusement 1,9 - 2,0 ;
Hafnium : 0,25 - 0,35, avantageusement 0,25 - 0,30 ;
Zirconium : 0,040 - 0,060, avantageusement 0,050 - 0,060 ;
Carbone : 0,010 - 0,030, avantageusement 0,015 - 0,025 ;
Bore : 0,01 - 0,03, avantageusement 0,01 - 0,02 ;
Nickel : solde ;
ainsi que les impuretés inévitables ;
la composition étant exempte de tantale.

La composition du superalliage à base de nickel selon l'invention contient donc les éléments suivants :
- Eléments d'addition majeurs : Co, Cr, Mo, W, Al, Ti, Nb;
- Eléments d'addition mineurs (concentration inférieure au pourcent massique) : Hf, C, B, Zr.

La composition selon l'invention comprend ainsi, en % en poids par rapport au poids total de la composition, du chrome (Cr) en une teneur comprise dans la gamme 10,0 - 11,25, avantageusement 10,0 - 11,2, en particulier 10,0 - 11,0, plus particulièrement 10,3 - 10,9. La teneur en chrome est mesurée avec une incertitude de t0,2, avantageusement ±0,15.

La composition selon l'invention comprend en outre, en % en poids par rapport au poids total de la composition, du cobalt (Co) en une teneur comprise dans la gamme 11,2 - 13,7, avantageusement 12,0 - 13,0, en particulier 12,2 - 12,8. La teneur en cobalt est mesurée avec une incertitude de t0,3, en particulier de t0,2, avantageusement ±0,15.

La composition selon l'invention comprend de plus, en % en poids par rapport au poids total de la composition, du molybdène (Mo) en une teneur comprise dans la gamme 3,1 - 3,8, avantageusement 3,2 - 3,7, en particulier 3,3 - 3,7. La teneur en molybdène est mesurée avec une incertitude de ±0,04, en particulier de t0,02, avantageusement ±0,01.

La composition selon l'invention comprend en outre, en % en poids par rapport au poids total de la composition, du tungstène (W) en une teneur comprise dans la gamme 3,1 - 3,8, avantageusement 3,1 - 3,5, en particulier 3,1 - 3,3. La teneur en tungstène est mesurée avec une incertitude de ±0,04, en particulier de t0,02, avantageusement ±0,01.

La composition selon l'invention comprend également, en % en poids par rapport au poids total de la composition, de l'aluminium (AI) en une teneur comprise dans la gamme 2,9 - 3,5, avantageusement 3,2 - 3,5, particulièrement 3,2 - 3,4. La teneur en aluminium est mesurée avec une incertitude de ±0,04, en particulier de t0,02, avantageusement ±0,01.

La composition selon l'invention comprend en outre, en % en poids par rapport au poids total de la composition, du titane (Ti) en une teneur comprise dans la gamme 4,6 - 5,6, avantageusement 4,6 - 5,0, en particulier 4,7 - 4,9. La teneur en titane est mesurée avec une incertitude de t0,2, en particulier de ±0,1.

La composition selon l'invention comprend par ailleurs, en % en poids par rapport au poids total de la composition, du niobium (Nb) en une teneur comprise dans la gamme 1,9 - 2,3, avantageusement 1,9 - 2,0. La teneur en niobium est mesurée avec une incertitude de ±0,04, en particulier de ±0,02.

La composition selon l'invention comprend par ailleurs, en % en poids par rapport au poids total de la composition, du hafnium (Hf) en une teneur dans la gamme 0,25 - 0,35, avantageusement 0,25 - 0,30, en particulier 0,26 - 0,28. La teneur en hafnium est mesurée avec une incertitude d'environ 10%.

La composition selon l'invention comprend de plus, en % en poids par rapport au poids total de la composition, du zirconium (Zr) en une teneur dans la gamme 0,040 - 0,060, avantageusement 0,050 - 0,060, en particulier 0,055 - 0,060, plus particulièrement 0,056 - 0,058. La teneur en zirconium est mesurée avec une incertitude d'environ 10%.

La composition selon l'invention comprend également, en % en poids par rapport au poids total de la composition, du carbone (C) en une teneur comprise dans la gamme 0,010 - 0,030, avantageusement 0,015 - 0,025, en particulier 0,019 - 0,023.La teneur en carbone est mesurée avec une incertitude de t0,003, en particulier de ±0,002.

La composition selon l'invention comprend également, en % en poids par rapport au poids total de la composition, du bore (B) en une teneur comprise dans la gamme 0,01 - 0,03, en particulier 0,01 - 0,02. La teneur en bore est mesurée avec une incertitude d'environ 10%.

Les éléments W, Cr, Co, et Mo participent principalement au durcissement de la matrice austénitique dite gamma. En particulier, les additions d'éléments réfractaires Mo et W permettent d'améliorer la résistance à chaud des superalliages en renforçant la matrice gamma par solution solide. Cependant, leur teneur doit rester limitée pour éviter de former des phases TCP fragilisantes, mais aussi pour éviter d'augmenter la densité de l'alliage, en raison de leur masse atomique élevée.

Par ailleurs, les additions de Cr et Co diminuent la température de solvus gamma prime du superalliage. Le Co est un élément chimiquement proche du Ni qui se substitue en partie à cet élément pour former une solution solide dans la phase gamma.

Dans un mode de réalisation avantageux, la somme des teneurs en W, Mo, Cr et Co, en % atomiques, est supérieure ou égale à 25,5 et inférieure ou égale à 29,5, soit 25,5 ≤ W+Mo+Cr+Co ≤ 29,5.

Dans un autre mode de réalisation avantageux, la somme des teneurs en W et Mo, en % atomiques, est supérieure ou égale à 2,3 et inférieure ou égale à 3,9, soit 2,3 ≤ W+Mo ≤ 3,9.

Les éléments Al, Ti et Nb favorisent la précipitation de la phase durcissante (Ni,Co)₃(Al,Ti,Nb) dite phase gamma prime.

Par ailleurs, les additions de Cr et Al permettent d'améliorer la résistance à l'oxydation et à la corrosion à haute température des superalliages.

Les éléments Ti et Nb se substituent à l'Al dans la phase gamma prime et la renforcent. Cependant, avantageusement le ratio des teneurs (Ti+Nb)/AI en %atomique doit rester inférieur à 1,2 afin d'éviter de stabiliser la phase êta ou delta (type Ni₃Ti, Ni₃Nb) à la place de gamma prime et donc de déstabiliser la phase gamma prime, soit (Ti+Nb)/AI < 1,2.

Ainsi, dans un mode de réalisation avantageux, le superalliage à base de nickel selon l'invention présente une fraction volumique de phase gamma prime comprise entre 52% et 60%, avantageusement avec la somme des teneurs en Al, Ti et Nb en % atomique comprise entre 13 et 15, soit 13 < AI+Ti+Nb < 15, et en particulier un rapport des teneurs (Ti+Nb)/AI en % atomique inférieur à 1,2, soit (Ti+Nb)/AI < 1,2.

Les éléments Hf, C, B et Zr favorisent la résistance des joints de grains en formant des précipités de type carbures et borures.

En particulier, l'addition d'Hf permet d'améliorer la résistance à l'oxydation des joints de grains, ce qui a un effet bénéfique sur la résistance à la propagation de fissures.

La composition du superalliage selon l'invention est exempte de tantale. En effet, le Tantale (Ta) participe au renforcement de la phase gamma prime mais a pour effet d'augmenter la densité de l'alliage.

Les impuretés inévitables de la composition selon l'invention proviennent des étapes de fabrication du superalliage ou des impuretés présentes dans les matières premières utilisées pour la fabrication du superalliage. On retrouve toutes les impuretés classiques rencontrées dans les superalliages à base de nickel. En particulier elles sont choisies dans le groupe constitué par le manganèse, le silicium, le vanadium, le soufre, le phosphore, le cuivre, le plomb, le fer, le bismuth, l'azote, l'oxygène, l'hydrogène et leurs mélanges. Elles peuvent constituer jusqu'à 1% en masse de l'alliage et ne représentent chacune pas plus de 0,5% en poids de la composition totale. De façon générale, la teneur des impuretés dans l'alliage est mesurée avec une incertitude de 10%.

Dans un mode de réalisation avantageux le superalliage à base de nickel selon l'invention est caractérisé en ce que sa composition comprend, en particulier est constituée de, en pourcentages en poids de la composition totale :
Chrome : 10,0 - 11,0, avantageusement 10,3 - 10,9 ;
Cobalt : 12,0 - 13,0, avantageusement 12,2 - 12,8 ;
Molybdène : 3,2 - 3,7, avantageusement 3,3 - 3,7 ;
Tungstène : 3,1 - 3,5, avantageusement 3,1 - 3,3 ;
Aluminium : 3,2 - 3,5, avantageusement 3,2 - 3,4;
Titane : 4,6 - 5,0 avantageusement 4,7 - 4,9 ;
Niobium : 1,9 - 2,0 ;
Hafnium : 0,25 - 0,30, avantageusement 0,26 - 0,28 ;
Zirconium : 0,050 - 0,060, avantageusement 0,055 - 0,060 ;
Carbone : 0,015 - 0,025, avantageusement 0,019 - 0,023 ;
Bore : 0,01 - 0,02 ;
Nickel : solde
ainsi que les impuretés inévitables ;
la composition étant exempte de tantale.

En particulier, la composition du superalliage selon la présente invention peut être telle qu'indiquée dans le tableau 1 suivant.

**Tableau 1**

| | **EX 1 (% masse)** | **EX 1 (% at)** |
|---|---|---|
| Ni | Base | Base |
| Cr | 10,61 | 11,74 |
| Co | 12,51 | 12,22 |
| Mo | 3,50 | 2,10 |
| W | 3,18 | 1,00 |
| Nb | 1,97 | 1,22 |
| AI | 3,31 | 7,06 |
| Ti | 4,82 | 5,79 |
| C | 0,021 | 0,101 |
| B | 0,0144 | 0,077 |
| Zr | 0,057 | 0,036 |
| Hf | 0,267 | 0,086 |
| Ta | 0 | 0 |

Dans un mode de réalisation avantageux le superalliage selon l'invention a une densité inférieure 8500 kg/m³, avantageusement inférieure à 8300 kg/m³. Ainsi la densité du superalliage de l'exemple 1 est de 8240 kg/m³. La mesure du volume est réalisée par pycnométrie à l'hélium et la mesure de la masse est réalisée avec une balance de précision, puis la densité est calculée à l'aide de ces deux mesures.

Dans un autre mode de réalisation avantageux, le superalliage selon l'invention a une stabilité métallurgique (c'est-à-dire une absence de phases TCP - Topological Compact Phases) jusqu'à 800 - 850°C.

Dans encore un autre mode de réalisation avantageux, le superalliage selon l'invention a une bonne résistance à l'oxydation.

Dans encore un autre mode de réalisation avantageux, le superalliage selon l'invention a un écart entre la température de solvus gamma prime et la température de brulure suffisamment important pour la réalisation du traitement supersolvus, avantageusement un écart d'au moins 15°C. Ainsi la température de solvus gamma prime du superalliage de l'exemple 1 est de 1195°C et sa température de brulure est de 1210°C.

La présente invention concerne en outre la poudre de superalliage selon l'invention. En effet le superalliage selon l'invention peut se trouver sous la forme d'une poudre d'une granulométrie comprise entre 10µm et 100µm.

La présente invention concerne en outre un procédé de fabrication d'une poudre de superalliage à base de nickel selon l'invention comprenant les étapes suivantes :
A- mélange de matières premières élémentaires ou pré alliées ;
B- fusion du mélange obtenue à l'étape A), avantageusement dans un four à induction sous vide (VIM) ;
C- atomisation au gaz, avantageusement à l'argon, du produit obtenu à l'étape B) de façon à obtenir une poudre, avantageusement majoritairement sphérique (c'est-à-dire sans angle vif) ;
D- tamisage de la poudre obtenue à l'étape C), avantageusement sous atmosphère inerte, de façon à obtenir la granulométrie visée ;
E- récupération de la poudre obtenue.

La granulométrie de la poudre est ainsi adaptée en fonction de la technologie de fabrication des pièces à base de poudre de superalliage envisagée. Les gammes granulométriques utilisées pour les différents procédés de fabrication varient en fonction de la technologie, de l'équipement et des applications visées. En général, si l'on combine toutes les applications, la poudre utilisée pour ces procédés aura des distributions granulométriques en nombre plus ou moins larges entre 10µm et 100µm.

La présente invention concerne en outre un procédé de fabrication d'une pièce, en particulier de turbines, en superalliage selon l'invention ou en poudre de superalliage selon l'invention, caractérisé en ce qu'il comprend les étapes suivantes :
a- forgeage,
b- traitement thermique à gradient de la pièce obtenue à l'étape a),
c- traitement thermique final de l'ensemble de la pièce à microstructure duale obtenue à l'étape b)
d- récupération de la pièce obtenue à l'étape c).

L'étape a) de forgeage peut être mise en oeuvre par des méthodes bien connues de l'homme du métier. Il peut s'agir par exemple d'un filage, en particulier filage à chaud, laminage, matriçage (tel que par exemple le forgeage isotherme), estampage, emboutissage et/ou un mélange de ces techniques. Toutes ces techniques sont bien connues de l'homme du métier. Cette étape a) permet d'obtenir une pièce en superalliage.

L'étape b) de traitement thermique à gradient peut être mise en oeuvre à l'aide du procédé et dispositif décrit dans la demande de brevet FR3043410.

Elle peut ainsi comporter un chauffage d'une zone de la pièce à une première température (T1) supérieure d'au moins 5°C à la température de solvus de la phase gamma prime dudit superalliage et inférieure à la température de fusion dudit superalliage (il s'agit donc d'un traitement supersolvus).

Le traitement thermique à gradient peut par exemple être réalisé par chauffage local par induction ou par toute méthode ou dispositif décrit dans FR3043410.

Dans le cas où la pièce est un disque de turbine, la zone de la pièce subissant la première température (T1) consiste en la zone de jante du disque, le reste de la pièce n'étant pas impacté par ce traitement.

Ainsi le traitement supersolvus (température T1) permet d'utiliser 100% du potentiel de durcissement associé à la phase gamma prime pour conserver un durcissement encore efficace à haute température (800°C et même pouvant supporter des pics à 850°C), tout en augmentant la taille de grain pour améliorer la tenue au fluage et à la fissuration. La taille de grain est ainsi avantageusement supérieure ou égale à 15µm (mesurée par la méthode des intercepts). La taille de grain est avantageusement de 40 µm en moyenne pour conserver une bonne résistance en fatigue.

L'étape b) permet donc d'obtenir une pièce à microstructure duale ou à gradient, c'est-à-dire n'ayant pas une microstructure homogène, en particulier dont la taille des grains n'est pas la même, selon que l'on se place dans la zone de la pièce ayant subi le traitement supersolvus ou celle n'ayant pas été impactée par le traitement supersolvus. Elle contient donc des gros grains et des grains fins, avantageusement des gros grains ayant une taille supérieure ou égale à 15µm par exemple dans la jante du disque, et des grains fins issus du forgeage ayant une taille inférieure à 15µm par exemple dans l'alésage du disque. La taille des grains est mesurée par la méthode des intercepts.

L'étape c) du procédé selon l'invention peut comprendre les étapes successives suivantes :
c1- mise en solution de l'ensemble de la pièce obtenue à l'étape b) à une température inférieure à la température de solvus de la phase gamma prime dudit superalliage (T2) (il s'agit donc d'un traitement subsolvus);
c2- traitement de trempe de l'ensemble de la pièce obtenue à l'étape c1) ; avantageusement la vitesse de trempe est adaptée à la massivité de la pièce afin d'obtenir une taille et une distribution optimale de la phase durcissante gamma prime.
c3- traitement de revenu de l'ensemble de la pièce obtenue à l'étape c2), avantageusement à une température supérieure à 760°C.

Le traitement thermique final de l'étape c) est donc le traitement thermique classique des alliages gamma/gamma prime. L'objectif de ce traitement est de traiter la structure non impactée par le traitement à gradient afin d'avoir, dans ces zones, une structure finale et donc des propriétés mécaniques équivalentes au niveau recherché. En effet dans la zone traitée uniquement en subsolvus (température T2), la taille des grains reste faible, avantageusement inférieure à 10µm (mesurée par la méthode des intercepts), ce qui permet d'obtenir de bonnes propriétés de traction et de fatigue à des températures moyennes, par exemple inférieures à 750°C.

En particulier l'étape c3) peut consister en un traitement de revenu simple palier ou double paliers.

Ainsi, un traitement de revenu final relativement chaud (>760°C) permet de stabiliser la microstructure de la pièce à haute température. Il permet également de relaxer les contraintes résiduelles issues de la trempe et du traitement à la température T2.

Les traitements de revenus et de trempe sont mis en oeuvre par des techniques bien connues de l'homme du métier.

La présente invention concerne enfin une pièce en superalliage selon la présente invention ou en poudre de superalliage selon la présente invention, présentant une microstructure duale, avantageusement susceptible d'être obtenue par le procédé selon la présente invention. Avantageusement il s'agit d'une pièce de turbomachine, plus avantageusement d'une pièce de turbine, en particulier d'un disque de turbine, d'un disque de compresseur, d'un anneau, d'une flasque ou d'un carter de turbine.

La pièce selon l'invention a donc une microstructure duale ou à gradient, c'est-à-dire qu'elle n'a pas une microstructure homogène. En particulier la taille des grains de la pièce n'est pas la même selon la zone de la pièce. Elle contient donc des gros grains et des grains fins, avantageusement des gros grains ayant une taille supérieure ou égale à 15µm, avantageusement de 40 µm en moyenne, et des grains fins ayant une taille inférieure à 15µm. Ainsi, dans le cas où la pièce est un disque de turbine, la zone de jante du disque est à gros grains, avantageusement ayant des grains présentant une taille supérieure ou égale à 15µm, avantageusement de 40 µm de moyenne, et la zone d'alésage du disque est à grains fins, avantageusement ayant des grains présentant une taille inférieure à 15µm. La taille des grains est mesurée par la méthode des intercepts.

Avantageusement la zone à gros grains de la pièce présente une bonne tenue au fluage selon la norme NF EN ISO 204 Aout 2009 à une température de 800°C, plus avantageusement une durée supérieure à 160 heures, en particulier supérieure à 170 heures, plus particulièrement supérieure à 175 heures, à 0,2% d'allongement sous une contrainte de 500 MPa et une température de 750°C. Cette zone peut même supporter des incursions à des températures de 850°C.

Avantageusement la zone à grains fins de la pièce présente une bonne résistance à la traction selon la Norme NF EN 2002-001/06 à une température inférieure à 750°C, en particulier une limite d'élasticité à 20°C supérieure à 1150MPa.

La présente invention sera mieux comprise à la lumière de la description des figures et des exemples qui suivent. Les exemples sont donnés à titre indicatif, non limitatif.

La figure 1 représente la comparaison de la limite d'élasticité (en MPa en fonction de la température en °C selon la Norme NF EN 2002-001/06) du superalliage selon l'exemple 1 avec d'autres alliages pour disques élaborés par métallurgie des poudres de l'art antérieur.

La figure 2 représente la comparaison de la résistance mécanique (en MPa en fonction de la température en °C selon la Norme NF EN 2002-001/06) du superalliage selon l'exemple 1 avec d'autres alliages pour disques élaborés par métallurgie des poudres de l'art antérieur.

### EXEMPLE

Un superalliage à base de nickel selon l'invention (exemple 1) a été fabriqué selon le procédé suivant : coulée sous vide d'un lingot, puis atomisation sous argon de ce lingot, tamisage à 53µm, mise en conteneur des poudres avec dégazage, puis filage à chaud de ces poudres sous forme de barre. La densité de l'alliage mesurée est de 8 240 kg/m³. La mesure du volume est réalisée par pycnométrie à l'hélium et la mesure de la masse est réalisée avec une balance de précision, puis la densité est calculée à l'aide de ces deux mesures. L'alliage contient 56,5% de phase gamma prime.

L'alliage fabriqué a la composition chimique en % massiques indiquée dans le tableau 1 ci-dessus.

La température de solvus de la phase gamma prime de cet alliage est de 1195°C.

Une partie de la barre a ensuite subi un traitement à une température de 1200°C donc supérieure à 1195°C pour une durée de 2h (traitement de supersolvus) puis refroidissement de 30°C/min, suivi d'un traitement à une température de 1165°C donc inférieure à 1195°C d'une durée de 2h (traitement de subsolvus) suivi d'une trempe de 100°C/min et d'un revenu à une température de 800°C donc supérieure à 760°C pendant une durée de 8h (cycle thermique représentatif de celui de la zone de jante d'un disque). La microstructure obtenue a une taille de grains mesurée par la méthode des intercepts de 24 µm mesurée en surface de l'échantillon à partir de clichés EBSD (Electron Back Scattered Diffraction), cette taille étant donc supérieure à 15µm.

Une autre partie de la barre a subi uniquement le traitement subsolvus suivi d'une trempe et le traitement de revenu, tous deux réalisés aux mêmes températures et pendant la même durée que la première partie de la barre (cycle thermique représentatif de celui de la zone d'alésage d'un disque). Cette microstructure a une taille de grains de 3,5 µm mesurée par la méthode des intercepts, cette taille étant donc inférieure à 15µm. Des essais de traction et de fluage ont été réalisés sur des échantillons prélevés dans ces deux barres respectivement selon les normes NF EN 2002-001/06 et NF EN ISO 204 Aout 2009.

Les résultats ont été comparés à des compositions de l'art antérieur élaborés par métallurgie des poudres et traitement thermique homogène ayant la composition en % massique telle qu'indiquée dans le tableau 2 ci-dessous :

**Tableau 2**

| **% masse** | **ME501** | **Alloy A selon** EP2628810 | **Rene88 (disponible commercialement)** | **SMO43 (N19 disponible commercialement)** |
|---|---|---|---|---|
| Ni | Base | Base | Base | Base |
| Cr | 12 | 10,18 | 16 | 13,3 |
| Co | 18 | 20,49 | 13 | 12,2 |
| Mo | 2,9 | 3,61 | 4 | 4,6 |
| W | 3,0 | 2,22 | 4 | 3,0 |
| Nb | 1,5 | 2,08 | 0,7 | 1,5 |
| AI | 3,0 | 3,53 | 2,1 | 2,9 |
| Ti | 3,0 | 3,03 | 3,7 | 3,6 |
| C | 0,05 | 0,035 | 0,05 | 0,015 |
| B | 0,03 | 0,040 | 0,015 | 0,01 |
| Zr | 0,05 | 0,058 | 0,05 | 0,05 |
| Hf | 0,4 | <0,01 | 0 | 0,25 |
| Ta | 4,8 | 4,76 | 0 | 0 |

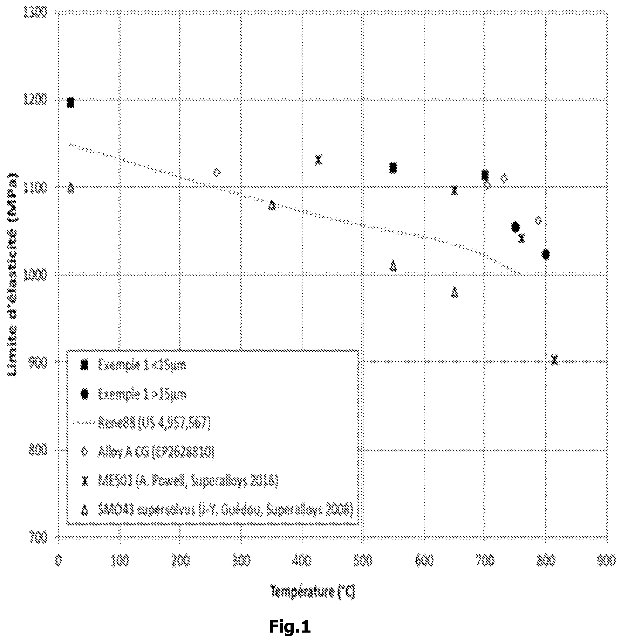

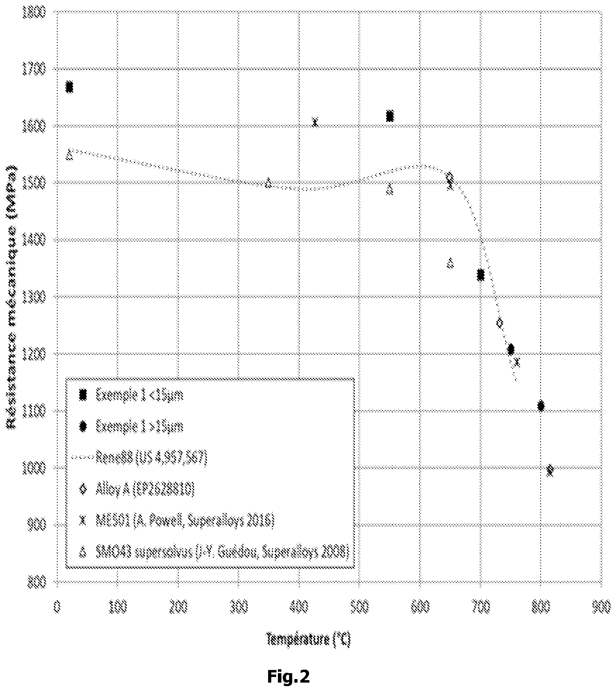

Les résultats en traction (limite d'élasticité et résistance mécanique en fonction de la température) sont indiqués dans les figures 1 et 2.

Les résultats de fluage sont indiqués dans le tableau 3 ci-dessous.

**Tableau 3**

| **Alliage** | **Température (°C)** | **Contrainte (MPa)** | **Temps à 0,2% d'allongement (heure)** |
|---|---|---|---|
| SMC43 (40-60 µm) | 750 | 500 | Environ 150 |
| Exemple 1 (10-40 µm) | 750 | 500 | > 179 |
| | 850 | 200 | > 37 |

Les résultats en traction de l'alliage selon l'invention (exemple 1) sont proches voire meilleurs que ceux des alliages ME501 et Alloy A, ces deux alliages étant chargés en tantale. Les résultats de traction sont également meilleurs que le SMO43 (N19), en réalisant en plus un gain sur la densité de l'alliage. En effet le SMO43 (N19) présente une densité de 8340 kg/m³. De plus, l'alliage selon l'invention a subi un revenu final relativement chaud (>760°C) par rapport aux alliages SMO43 (revenu final à 750°C) et ME501 (revenu final à 760°C), ceci afin de stabiliser sa microstructure à haute température mais en abaissant légèrement la résistance en traction et en fluage. Les carrés et les ronds pleins sur les figures 1 et 2 représentent les caractéristiques mécaniques de la pièce après traitement structure duale, et ceci en fonction de la température de fonctionnement vue par chaque zone (la transition se situe vers 750°C) : la zone grains fins (carrés pleins) a une résistance optimisée pour les températures inférieures à 750°C, et la zone gros grains (ronds pleins) a une résistance optimisée pour des températures supérieures à 750°C.

Les résultats de fluage allongement mettent en évidence la bonne résistance de l'alliage selon l'invention malgré une taille de grain plus fine et un revenu plus chaud que le SMO43. L'alliage peut également supporter des incursions à des températures très élevées telles que 850°C.

## Revendications

1. Superalliage à base de nickel, **caractérisé en ce que** sa composition comprend, en pourcentages en poids de la composition totale :
Chrome : 10,0 - 11,25, avantageusement 10,0 - 11,0 ;
Cobalt : 11,2 - 13,7, avantageusement 12,0 - 13,0 ;
Molybdène : 3,1 - 3,8, avantageusement 3,3 - 3,7 ;
Tungstène : 3,1 - 3,8, avantageusement 3,1 - 3,5 ;
Aluminium : 2,9 - 3,5, avantageusement 3,2 - 3,5;
Titane : 4,6 - 5,6, avantageusement 4,6 - 5,0 ;
Niobium : 1,9 - 2,3, avantageusement 1,9 - 2,0 ;
Hafnium : 0,25 - 0,35, avantageusement 0,25 - 0,30 ;
Zirconium : 0,040 - 0,060, avantageusement 0,050 - 0,060 ;
Carbone : 0,010 - 0,030, avantageusement 0,015 - 0,025 ;
Bore : 0,01 - 0,03, avantageusement 0,01 - 0,02 ;
Nickel : solde
ainsi que les impuretés inévitables ;
la composition étant exempte de tantale.

2. Superalliage à base de nickel selon la revendication 1, **caractérisé en ce qu'**il présente une fraction volumique de phase gamma prime comprise entre 52% et 60%.

3. Superalliage à base de nickel selon la revendication 2, **caractérisé en ce que** la somme des teneurs en Al, Ti et Nb en % atomique est comprise entre 13 et 15.

4. Superalliage à base de nickel selon l'une quelconque des revendication 2 ou 3, **caractérisé en ce que** le rapport des teneurs (Ti+Nb)/AI en % atomique est inférieur à 1,2.

5. Superalliage à base de nickel selon l'une quelconque des revendications 1 à 4, **caractérisé en ce que** la somme des teneurs en W, Mo, Cr et Co, en % atomiques, est supérieure ou égale à 25,5 et inférieure ou égale à 29,5.

6. Superalliage à base de nickel selon l'une quelconque des revendications 1 à 5, **caractérisé en ce que** la somme des teneurs en W et Mo, en % atomiques, est supérieure ou égale à 2,3 et inférieure ou égale à 3,9.

7. Poudre d'un superalliage selon l'une quelconque des revendications 1 à 6.

8. Procédé de fabrication d'une pièce en superalliage selon l'une quelconque des revendications 1 à 6 ou en poudre de superalliage selon la revendication 7, **caractérisé en ce qu'**il comprend les étapes suivantes :
a- forgeage,
b- traitement thermique à gradient de la pièce obtenue à l'étape a),
c- traitement thermique final de l'ensemble de la pièce à microstructure duale obtenue à l'étape b)
d- récupération de la pièce obtenue à l'étape c).

9. Procédé selon la revendication 8, **caractérisé en ce que** l'étape b) de traitement thermique à gradient de la pièce obtenue à l'étape a) comporte :
b1- un premier chauffage d'une zone de la pièce à une première température (T1) supérieure à la température de solvus de la phase gamma prime dudit superalliage et inférieure à la température de fusion dudit superalliage.

10. Procédé selon l'une quelconque des revendications 8 ou 9, **caractérisé en ce que** l'étape c) de traitement thermique final comprend les étapes successives suivantes :
c1- mise en solution de l'ensemble de la pièce obtenue à l'étape b) à une température inférieure à la température de solvus de la phase gamma prime, dudit superalliage(T2) ;
c2- traitement de trempe de l'ensemble de la pièce obtenue à l'étape c1) ;
c3- traitement de revenu de l'ensemble de la pièce obtenue à l'étape c2), avantageusement à une température supérieure à 760°C.

11. Pièce en superalliage selon l'une quelconque des revendications 1 à 6 ou en poudre de superalliage selon la revendication 7, présentant une microstructure duale, avantageusement susceptible d'être obtenu par le procédé selon l'une quelconque des revendications 8 à 10.

12. Pièce selon la revendication 11 **caractérisé en ce qu'**il s'agit d'une pièce de turbomachine, avantageusement d'une pièce de turbine, en particulier d'un disque de turbine, d'un disque de compresseur, d'un anneau, d'une flasque ou d'un carter de turbine.

## Patentansprüche

1. Superlegierung auf Nickelbasis, **dadurch gekennzeichnet, dass** ihre Zusammensetzung in Gew.-% der Zusammensetzung insgesamt umfasst:
Chrom: 10,0 - 11,25, in vorteilhafter Weise 10,0 - 11,0;
Kobalt: 11,2 - 13,7, in vorteilhafter Weise 12,0 - 13,0;
Molybdän: 3,1 - 3,8, in vorteilhafter Weise 3,3 - 3,7;
Wolfram: 3,1 - 3,8, in vorteilhafter Weise 3,1 - 3,5;
Aluminium: 2,9 - 3,5, in vorteilhafter Weise 3,2 - 3,5;
Titan: 4,6 - 5,6, in vorteilhafter Weise 4,6 - 5,0;
Niob: 1,9 - 2,3, in vorteilhafter Weise 1,9 - 2,0;
Hafnium: 0,25 - 0,35, in vorteilhafter Weise 0,25 - 0,30;
Zirkonium: 0,040 - 0,060, in vorteilhafter Weise 0,050 - 0,060;
Kohlenstoff: 0,010 - 0,030, in vorteilhafter Weise 0,015 - 0,025;
Bor: 0,01 - 0,03, in vorteilhafter Weise 0,01 - 0,02;
Nickel: Rest
sowie unvermeidbare Verunreinigungen;
wobei die Zusammensetzung frei von Tantal ist.

2. Superlegierung auf Nickelbasis nach Anspruch 1, **dadurch gekennzeichnet, dass** sie einen Gamma-Prime-Phase- Volumenanteil zwischen 52 % und 60 % aufweist.

3. Superlegierung auf Nickelbasis nach Anspruch 2, **dadurch gekennzeichnet, dass** die Summe der Gehalte an Al, Ti und Nb in Atom-% zwischen 13 und 15 liegt.

4. Superlegierung auf Nickelbasis nach einem der Ansprüche 2 oder 3, **dadurch gekennzeichnet, dass** das Verhältnis der Gehalte (Ti+Nb)/AI in Atom-% kleiner als 1,2 ist.

5. Superlegierung auf Nickelbasis nach einem der Ansprüche 1 bis 4, **dadurch gekennzeichnet, dass** die Summe der Gehalte an W, Mo, Cr und Co in Atom-% größer als oder gleich 25,5 und kleiner als oder gleich 29,5 ist.

6. Superlegierung auf Nickelbasis nach einem der Ansprüche 1 bis 5, **dadurch gekennzeichnet, dass** die Summe der Gehalte an W und Mo in Atom-% größer oder gleich 2,3 und kleiner oder gleich 3,9 ist.

7. Pulver einer Superlegierung nach einem der Ansprüche 1 bis 6.

8. Verfahren zur Herstellung eines Teils aus einer Superlegierung nach einem der Ansprüche 1 bis 6 oder aus Superlegierungspulver nach Anspruch 7, **dadurch gekennzeichnet, dass** es die folgenden Schritte umfasst:
a- Schmieden,
b- Gradienten-Wärmebehandlung des in Schritt a) erhaltenen Teils,
c- abschließende Wärmebehandlung des gesamten Teils mit dualer Mikrostruktur, das in Schritt b) erhalten wurde,
d- Rückgewinnung des in Schritt c) erhaltenen Teils.

9. Verfahren nach Anspruch 8, **dadurch gekennzeichnet, dass** Schritt b) der Gradienten-Wärmebehandlung des in Schritt a) erhaltenen Teils aufweist:
b1- ein erstes Erhitzen eines Bereichs des Teils auf eine erste Temperatur (T1), die höher als die Solvustemperatur der Gamma-Prime-Phase der Superlegierung und niedriger als die Schmelztemperatur der Superlegierung ist.

10. Verfahren nach einem der Ansprüche 8 oder 9, **dadurch gekennzeichnet, dass** der Schritt c) der abschließenden Wärmebehandlung die folgenden aufeinanderfolgenden Schritte umfasst:
c1- Lösungsglühen des gesamten in Schritt b) erhaltenen Teils bei einer Temperatur unterhalb der Solvustemperatur der Gamma-Prime-Phase der Superlegierung (T2);
c2- Abschreckbehandlung des gesamten in Schritt c1) erhaltenen Teils;
c3- Anlassbehandlung des gesamten in Schritt c2) erhaltenen Teils, in vorteilhafter Weise bei einer Temperatur über 760 °C.

11. Teil aus Superlegierung nach einem der Ansprüche 1 bis 6 oder aus Superlegierungspulver nach Anspruch 7 mit dualer Mikrostruktur, in vorteilhafter Weise erhältlich durch das Verfahren nach einem der Ansprüche 8 bis 10.

12. Teil nach Anspruch 11, **dadurch gekennzeichnet, dass** es sich um ein Teil einer Turbomaschine, in vorteilhafter Weise um ein Turbinenteil, insbesondere eine Turbinenscheibe, eine Verdichterscheibe, einen Ring, einen Flansch oder ein Turbinengehäuse handelt.

## Claims

1. A Nickel-based superalloy, **characterised in that** its composition comprises, in percent by weight of the total composition:
Chromium: 10.0-11.25, advantageously 10.0-11.0;
Cobalt: 11.2-13.7, advantageously 12.0-13.0;
Molybdenum: 3.1-3.8, advantageously 3.3-3.7;
Tungsten: 3.1-3.8, advantageously 3.1-3.5;
Aluminium: 2.9-3.5, advantageously 3.2-3.5;
Titanium: 4.6-5.6, advantageously 4.6-5.0;
Niobium: 1.9-2.3, advantageously 1.9-2.0;
Hafnium: 0.25-0.35, advantageously 0.25-3.0;
Zirconium: 0.040-0.060, advantageously 0.050-0.060;
Carbon: 0.010-0.030, advantageously 0.015-0.025;
Boron: 0.01-0.030, advantageously 0.01-0.02;
Nickel: remainder
as well as unavoidable impurities;
the composition being free of tantalum.

2. The nickel-based superalloy according to claim 1, **characterised in that** it has a volume fraction of gamma prime phase of between 52% and 60%.

3. The nickel-based superalloy according to claim 2, **characterised in that** the sum of the contents of Al, Ti and Nb in atomic % is between 13 and 15.

4. The nickel-based superalloy according to any one of claims 2 or 3, **characterised in that** the ratio of contents (Ti+Nb)/AI in atomic % is less than 1.2.

5. The nickel-based superalloy according to any one of claims 1 to 4, **characterised in that** the sum of the contents of W, Mo, Cr and Co, in atomic %, is greater than or equal to 25.5 and less than or equal to 29.5.

6. The nickel-based superalloy according to any one of claims 1 to 5, **characterised in that** the sum of the contents of W and Mo, in atomic %, is greater than or equal to 2.3 and less than or equal to 3.9.

7. A powder of a superalloy according to any one of claims 1 to 6.

8. A method for manufacturing a part made of superalloy according to any one of claims 1 to 6 or made of superalloy powder according to claim 7, **characterised in that** it comprises the following steps:
a - forging,
b - gradient heat treatment of the part obtained in step a),
c - final heat treatment of the entire dual-microstructure part obtained in step b)
d - recovery of the part obtained in step c).

9. The method according to claim 8, **characterised in that** step b) of gradient heat treatment of the part obtained in step a) includes:
b1 - a first heating of a region of the part at a first temperature (T1) greater than the solvus temperature of the gamma prime phase of said superalloy and less than the melting temperature of said superalloy.

10. The method according to any one of claims 8 or 9, **characterised in that** step c) of final heat treatment comprises the following successive steps:
c1- solution heat treatment of the entire part obtained in step b) at a temperature (T2) less than the solvus temperature of the gamma prime phase of said superalloy;
c2 - quenching treatment of the entire part obtained in step c1);
c3 - tempering treatment of the entire part obtained in step c2), advantageously at a temperature greater than 760°C.

11. A part made of superalloy according to any one of claims 1 to 6 or made of a superalloy powder according to claim 7, having a dual microstructure, advantageously obtainable by the method according to any one of claims 8 to 10.

12. The part according to claim 11 **characterised in that** it is a turbomachine part, advantageously a turbine part, in particular a turbine disc, a compressor disc, a ring, a flange or a turbine housing.
